# EUROPÄISCHE PATENTSCHRIFT

(11) **EP 2 644 454 B1**
(45) Veröffentlichungstag und Bekanntmachung des Hinweises auf die Patenterteilung: **22.03.2017**
(21) Anmeldenummer: 13001587.8
(22) Anmeldetag: 27.03.2013
(51) Int. Cl.: B60R 11/02, E02F 9/26

(54) **Außensteuerstand für eine Baumaschine**
External control panel for a construction machine
Poste de commande extérieur pour un engin

(30) Priorität: 29.03.2012 DE 202012003217 U
(43) Veröffentlichungstag der Anmeldung: 02.10.2013
(73) Patentinhaber: Joseph Vögele AG, 67067 Ludwigshafen (DE)
(72) Erfinder: Eul, Achim, 68305 Mannheim (DE); Buschmann, Martin, 67435 Neustadt (DE)
(74) Vertreter: Grünecker Patent- und Rechtsanwälte PartG mbB

(56) Entgegenhaltungen:
- EP-B1- 1 627 774
- DE-A1-102006 041 271
- DE-U1- 29 902 946

## Beschreibung

Die Erfindung bezieht sich auf einen Außensteuerstand für eine selbstfahrende Baumaschine, mit dem mindestens eine Arbeitskomponente der Baumaschine gesteuert werden kann.

Aus der Praxis sind selbstfahrende Baumaschinen mit Außensteuerständen bekannt, die es einem Benutzer während der Fahrt gestatten, Einstellungen an einer Arbeitskomponente der Baumaschine vorzunehmen. Beispielsweise kann es sich bei einer solchen Baumaschine um einen Straßenfertiger handeln, dessen ausziehbare Einbaubohle während der Fahrt an den Straßenverlauf angepasst wird.

Die DE 10 2006 041 721 A1 offenbart eine Bedienungseinrichtung, gemäss dem Oberbegriff des Anspruches 1, die unter anderem mit Baumaschinen eingesetzt werden kann. Sie umfasst eine Tastatur, die auf einem Gehäuseboden gelagert ist. Tastatur und Gehäuseboden werden durch einen Rahmen miteinander verbunden, der die beiden aufeinandergelegten Teile umgreift und um den Gehäuseboden und die Tastatur umlaufend angeordnet ist. Es wird eine Variante beschrieben, in der der Rahmen aus weichem Kunststoff besteht und so die Tastatur vor Stoßbeanspruchungen schützen soll.

Die EP 1 627 774 B1 der Anmelderin offenbart eine Baumaschine mit Bedienkonsole. Diese setzt sich aus verschiedenen modularen Bedieneinheiten zusammen, die im Schadensfall einzeln ausgetauscht werden können.

Die DE 299 02 946 U1 offenbart einen sogenannten Schutzkragen an einer Schalttafel eines Industrieroboters. Dieser Schutzkragen umschließt zumindest teilweise ein Gehäuse der Schalttafel. Die Form des Schutzkragen ist dabei dem Gehäuse der Schalttafel nachempfunden. Außerdem weist er an Durchbrüchen zur Betätigung der zu schützenden Bedienelemente einzelne Krägen auf, die die jeweiligen Bedienelemente bei einem Herunterfallen vor einer unbeabsichtigten Betätigung oder aber Beschädigung schützen sollen.

Aufgabe der vorliegenden Erfindung ist es, einen Außensteuerstand für eine Baumaschine zur Verfügung zu stellen, bei dem mit konstruktiv möglichst einfachen Mitteln die Robustheit erhöht und gleichzeitig die Teileanzahl des Außensteuerstands reduziert wird.

Diese Aufgabe wird gelöst durch einen Außensteuerstand mit den Merkmalen des Anspruchs 1. Vorteilhafte Weiterbildungen der Erfindung sind in den Unteransprüchen angegeben.

Der erfindungsgemäße Außensteuerstand ist zur Steuerung mindestens einer Arbeitskomponente einer selbstfahrenden Baumaschine vorgesehen. Der Außensteuerstand verfügt über wenigstens ein Anzeigefeld und eine Vielzahl von Eingabeelementen, wobei der Außensteuerstand weiter über wenigstens einen Befestigungsabschnitt zur Befestigung an der Baumaschine verfügt. Der erfindungsgemäße Außensteuerstand zeichnet sich dadurch aus, dass er eine Unterschale, eine Oberschale und einen Stoßschutz aufweist, wobei der Stoßschutz dazu konfiguriert ist, mit der Unterschale und der Oberschale in Kontakt zu sein. Somit erfüllt der Stoßschutz zwei vorteilhafte Aufgaben - nämlich den Außensteuerstand vor mechanischen Einflüssen, wie Stößen oder Beschädigungen durch Herunterfallen, zu schützen und das Eindringen von Verschmutzungen in den Außensteuerstand zu verhindern. Der Stoßschutz wirkt dazu vorzugsweise auch als Dichtung für den Außensteuerstand.

Um einen besonders effizienten Schutz zu gewährleisten, kann der Stoßschutz umlaufend bzw. einteilig ausgebildet sein. Dies vermeidet Stoßflächen durch aneinander gereihte Einzelteile und erleichtert die Montage.

Besonders vorteilhaft ist es, wenn der Stoßschutz aus einem elastischen Material gefertigt ist, um den Außensteuerstand besonders effektiv vor Stößen oder vor Beschädigungen beim Herunterfallen zu schützen.

Erfindungsgemäss weisen die Unterschale und die Oberschale eine nutförmige Vertiefung auf, um darin den Stoßschutz aufzunehmen. Dies ermöglicht auch eine formschlüssige Verbindung zwischen dem Stoßschutz und der Unterschale und der Oberschale.

Bevorzugt weist der Stoßschutz einen vorstehenden Dichtungsabschnitt auf, der dazu konfiguriert ist, eine formschlüssige Verbindung mit der Unterschale und/oder Oberschale zu bilden. Dies sichert den Stoßschutz vor einem Wegrutschen und hält ihn sicher an der zu schützenden Stelle bzw. dem zu schützenden Bereich an den Schalen des Außensteuerstands.

Besonders vorteilhaft ist es, wenn der vorstehende Dichtungsabschnitt T-förmig ausgebildet ist. Dadurch kann die formschlüssige Verbindung zwischen den Schalen und dem Stoßschutz besonders einfach und wirkungsvoll gebildet werden.

In einer weiteren vorteilhaften Ausführungsvariante ragt der Stoßschutz teilweise oder komplett über die Unterschale und/oder die Oberschale hinaus.

Bevorzugt ist der Außensteuerstand lösbar an der Baumaschine befestigt. Damit lässt sich der gesamte Außensteuerstand von einer Bedienperson tragen und ermöglicht so ein besonders sicheres und ergonomisches Bedienen der Baumaschine.

Um den Außensteuerstand bzw. die Baumaschine auch bei Dunkelheit, beispielsweise in Straßentunneln oder bei Nacht, bedienen zu können, kann das wenigstens eine Anzeigefeld und/oder die Vielzahl von Eingabeelementen von einer Hintergrundbeleuchtung hinterleuchtbar sein. Damit lassen sich wichtige Symbole, insbesondere Warnsymbole, oder Tasten auch bei Dunkelheit voneinander unterscheiden, so dass eine sichere Bedienung der Baumaschine ermöglicht wird.

Besonders vorteilhaft ist es, wenn die Hintergrundbeleuchtung einen Lichtleiter umfasst. Dies erlaubt eine besonders kostengünstige Beleuchtung des Außensteuerstands, da nur wenige Bauteile für die Beleuchtung notwendig sind.

Besonders vorteilhaft ist es, wenn der wenigstens eine Lichtleiter ein oder mehrere Lichtleiterplättchen umfasst. Damit lässt sich eine besonders kompakte Bauweise des Außensteuerstands erreichen.

Um für das Bedienpersonal eine vorteilhafte Bedienbarkeit zu erreichen, kann der Außensteuerstand über Eingriffe verfügen. Damit lässt sich der Außensteuerstand komfortabel und sicher in den Händen halten.

Die Vorteile des erfindungsgemäßen Außensteuerstands lassen sich besonders gut bei einem Straßenfertiger oder Beschicker ausnutzen.

Besonders vorteilhaft lässt sich der Außensteuerstand nutzen, wenn er zur Steuerung einer Einbaubohle eines Straßenfertigers verwendet wird.

Vorteilhaft ist es, wenn der Außensteuerstand ein Stellrad zur Steuerung der Ausziehbreite der Einbaubohle aufweist. Damit lässt sich eine besonders sichere und intuitive Steuerung der Einbaubohle erreichen.

Die Erfindung bezieht sich auch auf eine Baumaschine, beispielsweise einen Straßenfertiger oder einen Beschicker, mit einem Außensteuerstand der vorstehend beschriebenen Art.

Im Folgenden wird ein vorteilhaftes Ausführungsbeispiel der Erfindung anhand einer Zeichnung näher dargestellt. Im Einzelnen zeigen:
- Figur 1: eine perspektivische Ansicht eines erfindungsgemäßen Außensteuerstands;
- Figur 2: eine schematische Draufsicht eines erfindungsgemäßen Außensteuerstands,
- Figur 3: eine Seitenansicht eines erfindungsgemäßen Außensteuerstands;
- Figur 4: eine Unteransicht eines erfindungsgemäßen Außensteuerstands;
- Figur 5: eine Schnittansicht eines erfindungsgemäßen Außensteuerstands,
- Figur 6: eine Explosionsdarstellung eines erfindungsgemäßen Außensteuerstands und
- Figur 7: eine schematische Seitenansicht einer Baumaschine mit einem erfindungsgemäßen Außensteuerstand.

Gleiche Komponenten sind in den Figuren durchgängig mit gleichen Bezugszeichen versehen.

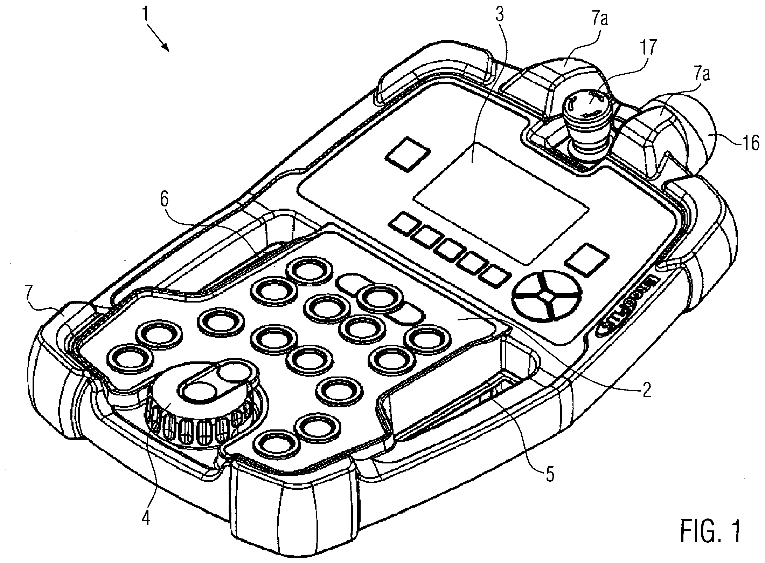

Figur 1 zeigt in perspektivischer Ansicht einen erfindungsgemäßen Außensteuerstand 1. Er kann zur Steuerung einer selbstfahrenden Baumaschine 100, vorzugsweise eines Straßenfertigers oder eines Beschickers, verwendet werden.

Üblicherweise ist der Außensteuerstand 1 an einer bzw. in der Nähe einer Arbeitskomponente der Baumaschine 100 angeordnet. Beispielsweise ist die Arbeitskomponente eine ausziehbare Einbaubohle 110 eines Straßenfertigers 100, die während der Einbaufahrt des Straßenfertigers 100 an den Straßenverlauf angepasst werden kann. Dabei können vorzugsweise mehrere Parameter der Arbeitskomponente 110 eingestellt werden, beispielsweise die Bohlenbreite oder -höhe.

Für die Steuerung der Arbeitskomponente 110 weist der Außensteuerstand 1 an seiner Oberseite eine Vielzahl von Eingabeelementen 2 auf, mit denen sich wichtige Funktionen bzw. die einstellbaren Parameter der Arbeitskomponente steuern bzw. einstellen lassen. Um dem Benutzer wichtige Parameter, Betriebsbedingungen oder Einstellungen anzeigen zu können, weist der Außensteuerstand 1 ferner wenigstens ein Anzeigefeld 3 an seiner Oberseite auf.

In Figur 1 ist gut zu erkennen, dass der Außensteuerstand 1 ein Stellrad 4 zur Beeinflussung der Einbaubohlenbreite einer ausziehbaren Einbaubohle 110 eines Straßenfertigers aufweist. Ebenfalls gut zu erkennen sind Eingriffe 5, 6, die seitlich in den Außensteuerstand 1 integriert sind und von einem Benutzer durchgriffen werden können, um ein sicheres Halten des Außensteuerstands 1 zu erlauben.

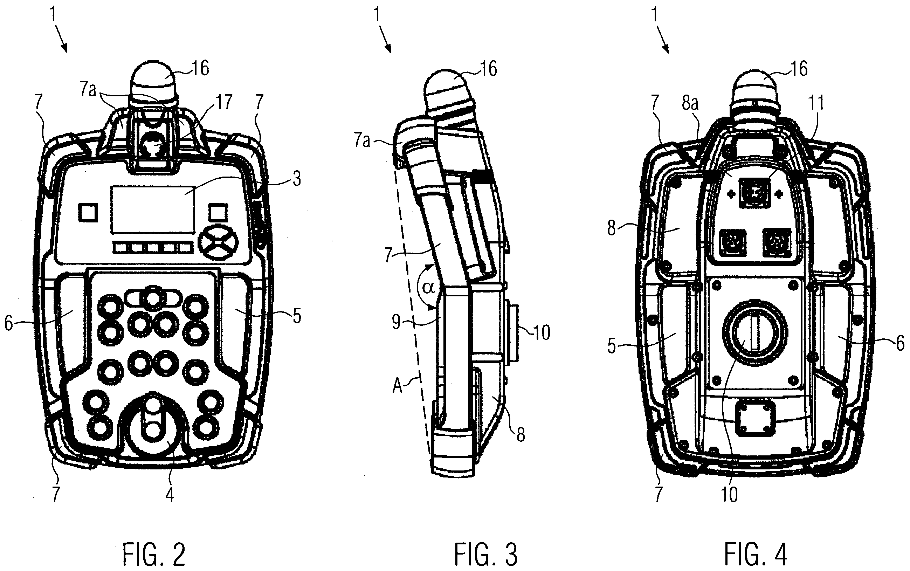

Figur 2 zeigt eine schematische Draufsicht des erfindungsgemäßen Außensteuerstands 1. Gut zu erkennen ist, dass der Außensteuerstand 1 an allen Seitenflächen über einen Stoßschutz 7 verfügt, der den Außensteuerstand 1 vor äußeren Einflüssen, wie mechanischen Beanspruchungen, Staub oder sonstigen Verschmutzungen schützt. Der Stoßschutz 7 ist aus einem witterungsbeständigen und/oder elastischen Material gefertigt, vorzugsweise einem Gummi oder einem Kunststoff. In diesem Ausführungsbeispiel ist der Stoßschutz 7 um den Außensteuerstand 1 umlaufend und einteilig ausgeführt. Für einen noch effizienteren Schutz der Oberseite des Außensteuerstands 1 weist der Stoßschutz 7 einen weiter hervorstehenden Bereich 7a auf, um als eine Art Stoßdämpfer zu funktionieren.

Figur 3 zeigt den erfindungsgemäßen Außensteuerstand 1 in einer schematischen Seitenansicht. Besonders deutlich ist der Aufbau des Außensteuerstands 1 dargestellt, der eine Unterschale 8 und eine Oberschale 9 aufweist. Die Unterschale 8 und die Oberschale 9 sind aus einem Kunststoff gefertigt, vorzugsweise im Kompaktspritzgussverfahren.

Figur 4 zeigt den Außensteuerstand 1 in einer schematischen Unteransicht. Der Außensteuerstand verfügt an seiner Unterseite über einen Befestigungsabschnitt 10, um den Außensteuerstand 1 sicher und robust an der Baumaschine 100 zu befestigen. Beispielsweise kann der Außensteuerstand 1 mit dem Befestigungsabschnitt 10 auf ein rohrförmiges Element der Baumaschine 100 aufgesteckt und daran gesichert werden. Für eine bidirektionale Kommunikation mit der Baumaschine bzw. mit deren Arbeitskomponenten verfügt der Außensteuerstand 1 an seiner Unterseite über wenigstens einen elektrischen Anschluss 11, der vor Stoßeinwirkungen geschützt in einer Vertiefung 8a der Unterschale 8 angeordnet ist.

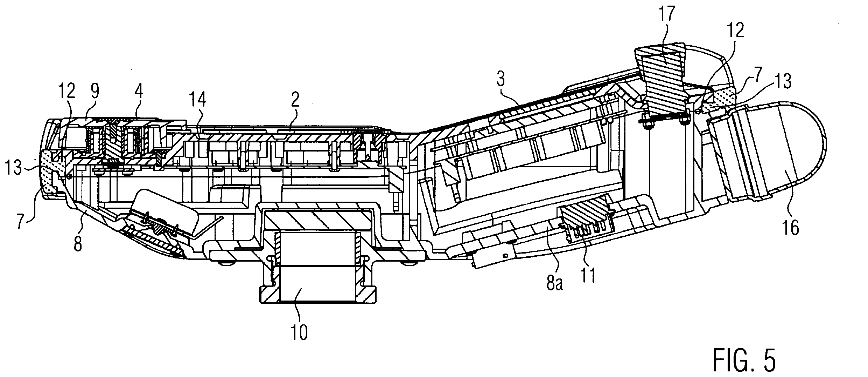

Figur 5 zeigt eine Schnittansicht des erfindungsgemäßen Außensteuerstands 1. Besonders gut ist der zweischalige Aufbau mit der Unterschale 8, der Oberschale 9 und dem Stoßschutz 7 zu erkennen. Der Stoßschutz 7 ist so konfiguriert, dass er mit der Unterschale 8 und der Oberschale 9 in Kontakt ist. Um den Stoßschutz 7 auch bei starker mechanischer Beanspruchung zu schützen, beispielsweise bei Stürzen des Außensteuerstands 1 auf harte Unterlagen, bilden die Unterschale 8 und die Oberschale 9 eine nutförmige Vertiefung 12. Diese nimmt einen hervorstehenden, in diesem Beispiel T-förmigen, Dichtungsabschnitt 13 des Stoßschutzes 7 auf. Die nutförmige Vertiefung 12 und der Dichtungsabschnitt 13 bilden damit eine formschlüssige Verbindung, um den Stoßschutz 7 besonders sicher zu fixieren. Des Weiteren deckt der Stoßschutz 7 mit einer weitgehend ebenen Fläche Stoßflächen der aneinander liegenden Unterschale 8 und Oberschale 9 ab, um den Außensteuerstand 1 gegen das Eindringen von Verschmutzungen abzudichten.

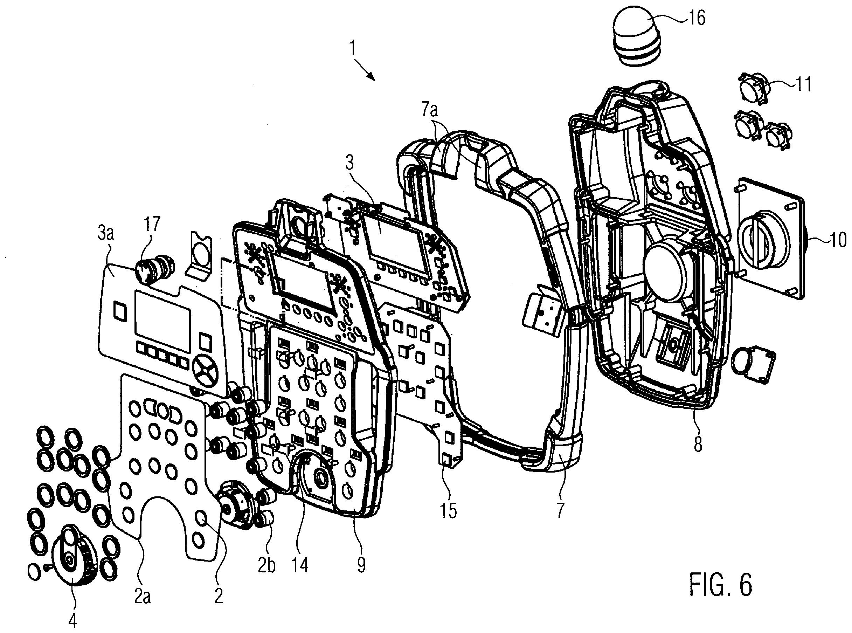

Figur 6 zeigt eine Explosionsansicht des erfindungsgemäßen Außensteuerstands 1. Besonders gut zu erkennen ist, dass die Vielzahl von Eingabeelementen 2 eine einteilige Decklage 2a und darunter angeordnete Druckelemente 2b umfasst. Die Druckelemente werden von der Oberschale 9 aufgenommen und von der Decklage 2a so abgedeckt, dass das Eindringen von Verschmutzungen in den Außensteuerstand 1 vermieden wird. Eine weitere Decklage 3a deckt das Anzeigefeld 3 ab und schützt dieses vor Verschmelzungen oder Nässe. Wie in Figur 3 dargestellt, schließen die Decklagen 2a, 3a einen Winkel α zwischen sich ein, der vorzugsweise kleiner 180° ist und beispielsweise zwischen 150° und 175° liegt, insbesondere etwa 165°. Diese Neigung bewirkt, dass die Eingabeelemente 2 und/oder das Anzeigenfeld 3 jeweils unterhalb einer Ebene A (gestrichelt eingezeichnet) angeordnet sind, die sich von einer oberen Kante bis zu einer unteren Kante des Außensteuerstands 1 erstreckt. Damit bewirkt die Neigung um den Winkel α, dass beim Herunterfallen des Außensteuerstands 1 die Eingabeelemente 2 und/oder das Anzeigefeld 3 durch den Stoßschutz 7 geschützt sind.

In Figur 6 ist ebenfalls gut eine Vielzahl von Lichtleitern 14 zu erkennen, die zum Hinterleuchten von auf der Decklage 2a aufgedruckten Symbolen dienen. Die Lichtleiter 14 sind in diesem Ausführungsbeispiel als Lichtplättchen ausgeführt, um eine flache und kompakte Bauweise des Außensteuerstands 1 zu erreichen. Die Lichtleiter 14 wirken mit einer Hintergrundbeleuchtung 15 zusammen, die das von den Lichtleitern 14 transportierte Licht erzeugt. Als Sicherheitsmerkmal verfügt der Außensteuerstand 1 ferner über eine Warnleuchte 16 und eine durch den hervorstehenden Bereich 7a des Stoßschutzes 7 vor Stoßeinwirkungen geschützten Notaus-Schalter 17.

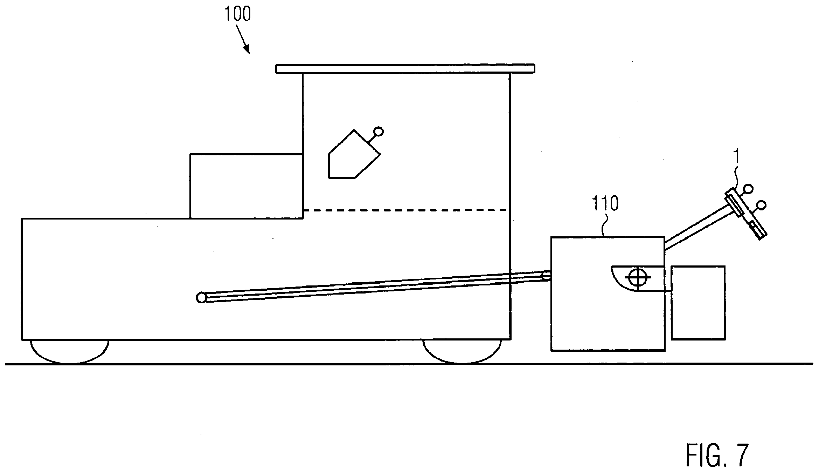

In Figur 7 ist die bevorzugte Anordnung des Außensteuerstands 1 an der Baumaschine 100, in diesem Beispiel ein Straßenfertiger 100, dargestellt.

In einer weiteren Ausführungsvariante der Erfindung kann der Stoßschutz 7 mehrteilig ausgeführt sein. Denn für einige Einsatzzwecke kann es ausreichend sein, wenn beispielsweise nur die Ecken der Unterschale 8 und der Oberschale 9 von dem Stoßschutz 7 abgedeckt sind.

## Patentansprüche

1. Außensteuerstand (1) zur Steuerung mindestens einer Arbeitskomponente (110) einer selbstfahrenden Baumaschine (100), mit wenigstens einem Anzeigefeld (3) und einer Vielzahl von Eingabeelementen (2), wobei der Außensteuerstand (1) wenigstens einen Befestigungsabschnitt (10) zur Befestigung an der Baumaschine (100) verfügt und eine Unterschale (8), eine Oberschale (9) und einen Stoßschutz (7) aufweist, wobei der Stoßschutz (7) dazu konfiguriert ist, mit der Unterschale (8) und der Oberschale (9) in Kontakt zu sein, **dadurch gekennzeichnet, dass** die Unterschale (8) und die Oberschale (9) eine nutförmige Vertiefung (12) bilden, um den Stoßschutz (7) aufzunehmen.

2. Außensteuerstand nach Anspruch 1, **dadurch gekennzeichnet, dass** der Stoßschutz (7) umlaufend ausgebildet ist.

3. Außensteuerstand nach Anspruch 1 oder 2, **dadurch gekennzeichnet, dass** der Stoßschutz (7) aus einem elastischen Material gefertigt ist.

4. Außensteuerstand nach einem der vorangehenden Ansprüche, **dadurch gekennzeichnet, dass** der Stoßschutz (7) einen vorstehenden Dichtungsabschnitt (13) aufweist, der dazu konfiguriert ist, eine formschlüssige Verbindung mit der Unterschale (8) und/oder der Oberschale (9) zu bilden.

5. Außensteuerstand nach Anspruch 4, **dadurch gekennzeichnet, dass** der vorstehende Dichtungsabschnitt (13) T-förmig ausgebildet ist.

6. Außensteuerstand nach einem der vorangehenden Ansprüche, **dadurch gekennzeichnet, dass** der Stoßschutz (7) teilweise oder komplett über die Unterschale (8) und/oder die Oberschale (9) hinausragt.

7. Außensteuerstand nach einem der vorangehenden Ansprüche, **dadurch gekennzeichnet, dass** der Außensteuerstand (1) für eine lösbare Befestigung an der Baumaschine konfiguriert ist.

8. Außensteuerstand nach einem der vorangehenden Ansprüche, **dadurch gekennzeichnet, dass** das wenigstens eine Anzeigefeld (3) und/oder die Vielzahl von Eingabeelementen (2) von einer Hintergrundbeleuchtung (15) hinterleuchtbar sind.

9. Außensteuerstand nach Anspruch 8, **dadurch gekennzeichnet, dass** die Hintergrundbeleuchtung (15) wenigstens einen Lichtleiter (14) umfasst.

10. Außensteuerstand nach Anspruch 9, **dadurch gekennzeichnet, dass** der wenigstens eine Lichtleiter (14) ein Lichtleiterplättchen ist.

11. Außensteuerstand nach einem der vorangehenden Ansprüche, **dadurch gekennzeichnet, dass** der Außensteuerstand (1) über Eingriffe (5, 6) verfügt.

12. Außensteuerstand nach einem der vorangehenden Ansprüche **dadurch gekennzeichnet, dass** die Eingabeelemente (2) und das Anzeigefeld (3) jeweils von einer Decklage (2a, 3a) umgeben sind und die Decklagen (2a, 3a) einen Winkel (α) von weniger als 180° einschließen.

13. Außensteuerstand nach einem der vorangehenden Ansprüche, **dadurch gekennzeichnet, dass** der Außensteuerstand (1) auf seiner Unterseite weiter wenigstens einen elektrischen Anschluss (11) aufweist und der wenigstens eine elektrische Anschluss (11) in einer Vertiefung (8a) der Unterschale (8) angeordnet ist.

14. Außensteuerstand nach einem der vorangehenden Ansprüche, **dadurch gekennzeichnet, dass** der Außensteuerstand (1) zur Steuerung einer Einbaubohle (110) eines Straßenfertigers (100) konfiguriert ist.

15. Außensteuerstand nach Anspruch 14, **dadurch gekennzeichnet, dass** der Außensteuerstand ein Stellrad (4) aufweist, das zur Steuerung der Ausziehbreite der Einbaubohle (110) konfiguriert ist.

16. Baumaschine (100) mit einem Außensteuerstand (1) nach einem der vorangehenden Ansprüche.

## Claims

1. External control stand (1) for controlling at least one working component (110) of a self-propelled construction machine (100) with at least one display panel (3) and a plurality of input elements (2), wherein the external control stand (1) has at least one mounting section (10) to mount it at the construction machine (100), and comprises a lower shell (8), an upper shell (9), and an impact protection (7), wherein the impact protection (7) is configured to be in contact with the lower shell (8) and the upper shell (9), **characterized in that** the lower shell (8) and the upper shell (9) form a groove-like recess (12) to receive the impact protection (7).

2. External control stand according to claim 1, **characterized in that** the impact protection (7) is designed to be circumferential.

3. External control stand according to claim 1 or 2, **characterized in that** the impact protection (7) is made of an elastic material.

4. External control stand according to one of the preceding claims, **characterized in that** the impact protection (7) comprises a projecting sealing section (13) which is configured to form a form-locking connection with the lower shell (8) and/or the upper shell (9).

5. External control stand according to claim 4, **characterized in that** the projecting sealing section (13) has a T-shaped design.

6. External control stand according to one of the preceding claims, **characterized in that** the impact protection (7) partially or completely projects beyond the lower shell (8) and/or the upper shell (9).

7. External control stand according to one of the preceding claims, **characterized in that** the external control stand (1) is configured to be detachably mounted to the construction machine.

8. External control stand according to one of the preceding claims, **characterized in that** the at least one display panel (3) and/or the plurality of input elements (2) can be illuminated by a background lighting (15).

9. External control stand according to claim 8, **characterized in that** the background lighting (15) comprises at least one light conductor (14).

10. External control stand according to claim 9, **characterized in that** the at least one light conductor (14) is a light conductor plate.

11. External control stand according to one of the preceding claims, **characterized in that** the external control stand (1) has grips (5, 6).

12. External control stand according to one of the preceding claims, **characterized in that** the input elements (2) and the display panel (3) each are surrounded by a cover layer (2a, 3a) and the cover layers (2a, 3a) confine an angle (α) of less than 180°.

13. External control stand according to one of the preceding claims, **characterized in that** the external control stand (1) furthermore comprises at least one electrical connection (11) at its bottom side, and the at least one electrical connection (11) is disposed in a recess (8a) of the lower shell (8).

14. External control stand according to one of the preceding claims, **characterized in that** the external control stand (1) is configured to control a screed (110) of a road finishing machine (100).

15. External control stand according to claim 14, **characterized in that** the external control stand comprises an adjusting wheel (4) configured to control the extension width of the screed (110).

16. Construction machine (100) with an external control stand (1) according to one of the preceding claims.

## Revendications

1. Pupitre de commande extérieur (1) pour assurer la commande d'au moins un composant de travail (110) d'un engin de travaux publics (100) automoteur, comprenant au moins un champ de visualisation (3) et un grand nombre d'éléments de saisie (2), le pupitre de commande extérieur (1) disposant d'au moins un tronçon de fixation (10) pour la fixation à l'engin de travaux publics (100), et présentant une coque inférieure (8), une coque supérieure (9) et un élément de protection contre les chocs (7), l'élément de protection contre les chocs (7) étant configuré pour être en contact avec la coque inférieure (8) et la coque supérieure (9), **caractérisé en ce que** la coque inférieure (8) et la coque supérieure (9) forment un creux (12) en forme de rainure, en vue d'accueillir l'élément de protection contre les chocs (7).

2. Pupitre de commande extérieur selon la revendication 1, **caractérisé en ce que** l'élément de protection contre les chocs (7) est d'une configuration périphérique.

3. Pupitre de commande extérieur selon la revendication 1 ou la revendication 2, **caractérisé en ce que** l'élément de protection contre les chocs (7) est fabriqué en un matériau élastique.

4. Pupitre de commande extérieur selon l'une des revendications précédentes, **caractérisé en ce que** l'élément de protection contre les chocs (7) présente un tronçon d'étanchéité (13) en saillie, qui est configuré pour assurer une liaison par complémentarité de formes avec la coque inférieure (8) et la coque supérieure (9).

5. Pupitre de commande extérieur selon la revendication 4, **caractérisé en ce que** le tronçon d'étanchéité précité (13) est d'une configuration en forme de T.

6. Pupitre de commande extérieur selon l'une des revendications précédentes, **caractérisé en ce que** l'élément de protection contre les chocs (7) dépasse partiellement ou complètement de la coque inférieure (8) et/ou de la coque extérieure (9).

7. Pupitre de commande extérieur selon l'une des revendications précédentes, **caractérisé en ce que** le pupitre de commande extérieur (1) est configuré pour permettre une fixation amovible à l'engin de travaux publics.

8. Pupitre de commande extérieur selon l'une des revendications précédentes, **caractérisé en ce que** ledit au moins un champ de visualisation (3) et/ou le grand nombre d'éléments de saisie (2) peuvent être rétroéclairés par un rétroéclairage (15).

9. Pupitre de commande extérieur selon la revendication 8, **caractérisé en ce que** le rétroéclairage (15) comprend au moins un guide d'onde lumineuse (14).

10. Pupitre de commande extérieur selon la revendication 9, **caractérisé en ce que** ledit au moins un guide d'onde lumineuse (14) est une plaque de guide d'onde lumineuse.

11. Pupitre de commande extérieur selon l'une des revendications précédentes, **caractérisé en ce que** le pupitre de commande (1) dispose de poignées de préhension (5, 6).

12. Pupitre de commande extérieur selon l'une des revendications précédentes, **caractérisé en ce que** les éléments de saisie (2) et le champ de visualisation (3) sont recouverts respectivement par une couche de recouvrement (2a, 3a), et les couches de recouvrement (2a, 3a) forment un angle (α) de moins de 180° entre-elles.

13. Pupitre de commande extérieur selon l'une des revendications précédentes, **caractérisé en ce que** le pupitre de commande extérieur (1) comporte, en outre, sur son côté inférieur, au moins un raccord de branchement électrique (11), et ledit au moins un raccord de branchement électrique (11) est agencé dans un creux (8a) de la coque inférieure (8).

14. Pupitre de commande extérieur selon l'une des revendications précédentes, **caractérisé en ce que** le pupitre de commande extérieur (1) est configurée pour assurer la commande d'une table de pose de finisseur (110) d'un finisseur de route (100).

15. Pupitre de commande extérieur selon la revendication 1, **caractérisé en ce que** le pupitre de commande extérieur comprend un volant de réglage (4) pour commander la largeur d'extraction de la table de pose de finisseur (110).

16. Engin de travaux publics (100) comprenant un pupitre de commande extérieur (1) selon l'une des revendications précédentes.
